# EUROPEAN PATENT SPECIFICATION

(11) **EP 2 085 851 B1**
(45) Date of publication and mention of the grant of the patent: **29.05.2013**
(21) Application number: 09150670.9
(22) Date of filing: 15.01.2009
(51) Int. Cl.: F16K 7/06, G05D 16/20, F16K 7/04, F16K 7/07

(54) **Device for regulating the flow of a liquid.**
Vorrichtung zur Regelung des Flusses einer Flüssigkeit
Dispositif de régulation du flux de liquides

(30) Priority: 01.02.2008 IT BO20080073
(43) Date of publication of application: 05.08.2009
(73) Proprietor: SACMI Cooperativa Meccanici Imola Società Cooperativa, 40026 Imola (BO) (IT)
(72) Inventor: Sarani, Giorgio, 40021, BORGO TOSSIGNANO (Bologna) (IT); Liverani, Luca, 48010, COTIGNOLA (Ravenna) (IT)
(74) Representative: Lanzoni, Luciano

(56) References cited:
- JP-A- 7 332 510
- US-A- 3 397 860

## Description

This invention relates to a device for regulating the flow of a liquid, in particular an abrasive liquid which may be supplied to/drained from moulds for the manufacture of ceramic products.

The use is well known of a liquid called "slip", in trade jargon, in the field of manufacture of the above-mentioned ceramic products (such as, for example, washbasins, toilets, bidets, shower trays, etc.).

This fluid mixture, comprising a watery part and a ceramic part in suspension, is cast into "shell" moulds which have a known structure of a porous type, in particular obtained with resin.

The above-mentioned mould is part of a plant, of a known type, having, amongst other things, flexible and elastically deformable pipes enabling, on the one hand, supply of the slip to the mould, and, on the other hand, draining off of the spent slip.

This plant is designed to perform a type of casting which, in its simplest and most basic form, comprises the following steps:
- flushing the supply circuits with fresh slip;
- filling the mould at an initial pressure;
- forming the thickness with pressure profiles greater than the filling pressure;
- emptying the mould with return, normally, to atmospheric pressure;
- consolidating the product with air;
- decompressing the product.

The casting cycle starts with the mould closed and product cavities perfectly clean and empty and ends with the mould closed, but with product cavities containing the product just produced, the mechanical strength of which must be sufficient to support its weight when it is extracted from the mould.

In order to complete the production cycle it will be necessary, as known, to provide a mould closing step before the casting cycle and a step of demoulding the product after its manufacture.

Usually, the above-mentioned supply pipes and, in turn, the pipes for draining off the spent slip, are fitted with devices to regulate the flow of the fluid, in order to control the flow, based on the requirements of the ceramic product during the casting steps in the plant: in this respect, the mould filling and emptying steps are particularly critical.

The slip, due to its intrinsic nature, is an abrasive liquid and, therefore, the regulators currently used are exposed to relatively fast wear, in particular the moving parts used to reduce the cross-section of the fluid passage: the presence of known mechanical metal valves, such as, for example, butterfly valves, tend to wear quite quickly.

Solutions have therefore been sought for regulators which could have good reliability characteristics, precision in regulating the fluid flow and a good resistance to wear.

One of these solutions is known from patent IT - 1.257.661 which illustrates a flow regulating valve comprising a connection body between two segments of a pipe and in which there is a connection chamber between the same pipe segments.

The chamber houses an intermediate fluid passage mouth fitted with a mechanical valve protected, from contact with the passing fluid, by an elastic membrane fixed peripherally to the connection body. In another solution known from patent GB 2.042.128, the valve comprises a section of deformable pipe placed between/associated with relative fluid pipe segments.

This section of pipe is acted on, in contraposition, by a fixed striker block and a half-ring element or mobile pressure cradle on a point of the pipe.

This pressure cradle is acted upon, on one side, by a thrust spring designed to maintain the section of pipe squashed towards the block in a closed passage configuration, and, on the other side, by a cursor controlled by an actuator to enable movement of the cradle, in both directions, by a force greater than the force generated by the spring: in this way, the cross-section of the pipe section may be opened at this point.

On the one hand, both these solutions limit the risk of wear of the structure due to the presence of rubber or deformable plastic elements (membrane and pipe section), but, on the other hand, they are inadequate in terms of speed, flow control variability, reliability and working life of the regulator.

In particular, the dynamic nature and the precision in fluid flow the control are important variables, since, in the specific case of slip, for example, the flow must have a kind of initial increasing ramp and a final decreasing ramp, in order to avoid the formation of air bubbles and spray inside the mould during the casting and product forming cycle. These limitations are caused, in particular, by the reduced control zone and by the presence of an intermediate element between the two sections of the pipe.

Basically, the narrowings generated in these solutions are limited to a short length of the pipe resulting in high head losses in a limited section of the pipe; this situation leads to a transformation of the energy of the fluid into heat, which is dissipated in this section of the pipe and tends to critically accelerate the wear of the material in contact with the fluid itself.

Another consequence of reducing the cross-section of the pipe is the increase of the speed of the fluid, the generated kinetic energy of which, striking the walls of the pipe, could cause a stress on the surfaces in question which the material (rubber or plastic) is unable to support, over time, and wears prematurely.

The presence of an intermediate element which forms part of the valve unit structure for connection with the pipe sections, combined with the presence of mobile regulation elements with complex movement mechanisms, makes these solutions costly and results in poor reliability over time.

Patent document JP 7 332510 discloses a valve for a deformable pipe comprising an upper and lower support plate and an expansion tube disposed transversally with respect to the deformable pipe. Such expansion tube is inflated to close the deformable pipe and deflated to open the deformable pipe.

Patent document US 3397860 describe a valve for a conduct. The conduct comprise a flexible diaphragm sealed to its inner wall surface wherein a fluid is fed for allowing a completely closing of the conduct itself.

The aforementioned solution disclosed in documents JP 7 332510 and US 3397860 concerns open and closing valve which are neither designed nor used to regulate in a continuous manner the flow of the fluid in the pipe / conduct.

An aim of this invention is therefore to overcome these shortcomings by providing a device for regulating the flow of a fluid, in particular an abrasive fluid, with an extremely simple and inexpensive structure with a long life and precise functional characteristics correlated to the operational needs of the ceramic product forming cycle.

In accordance with this invention, the above-mentioned aim is achieved by a flow regulation device, in particular a device for regulating the flow of abrasive fluids, comprising the technical characteristics described in one or more of the appended claims.

The technical characteristics of the invention, with reference to the above aims, are clearly described in the appended claims and its advantages are apparent from the detailed description which follows, with reference to the accompanying drawings which illustrate a preferred embodiment of the invention provided merely by way of example without restricting the scope of the inventive concept, and in which:
- Figure 1 is a first plant layout for the manufacture of ceramic products fitted with the device for regulating the flow of a liquid, in accordance with this invention;
- Figure 2 is a second plant layout for the manufacture of ceramic products fitted with the device for regulating the flow of a liquid, in accordance with this invention;
- Figure 3 illustrates the device for regulating the flow of the liquid in a side view with some parts in cross-section and others cut away;
- Figure 4 is a perspective view of the device of Figure 3;
- Figure 5 illustrates the device of Figure 4 in a perspective exploded view;
- Figure 6 illustrates a graph of the liquid flow as a function of the drive pressure of the device according to this invention;
- Figure 7 illustrates a section VII - VII referred to Figure 4.

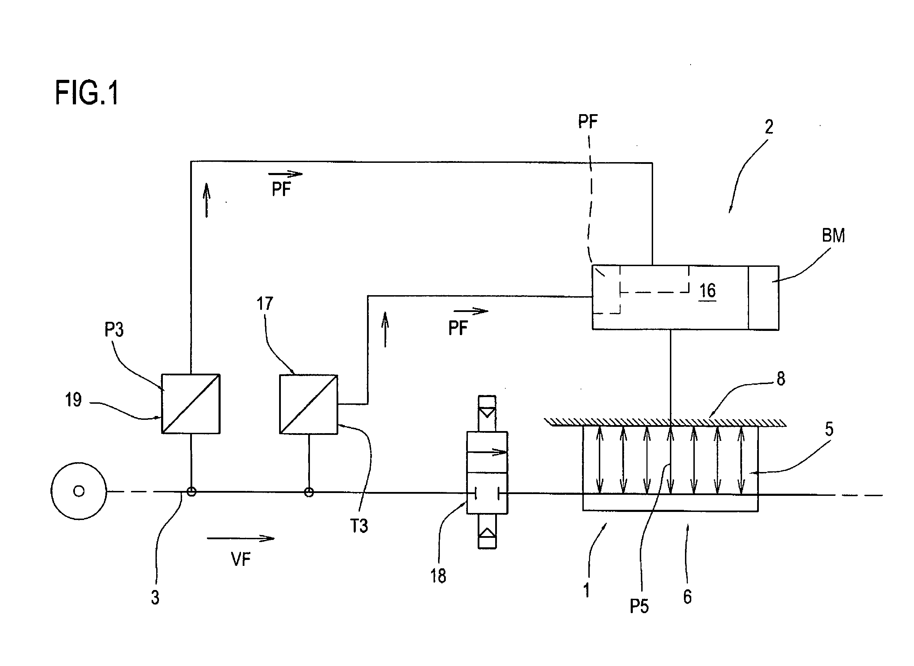

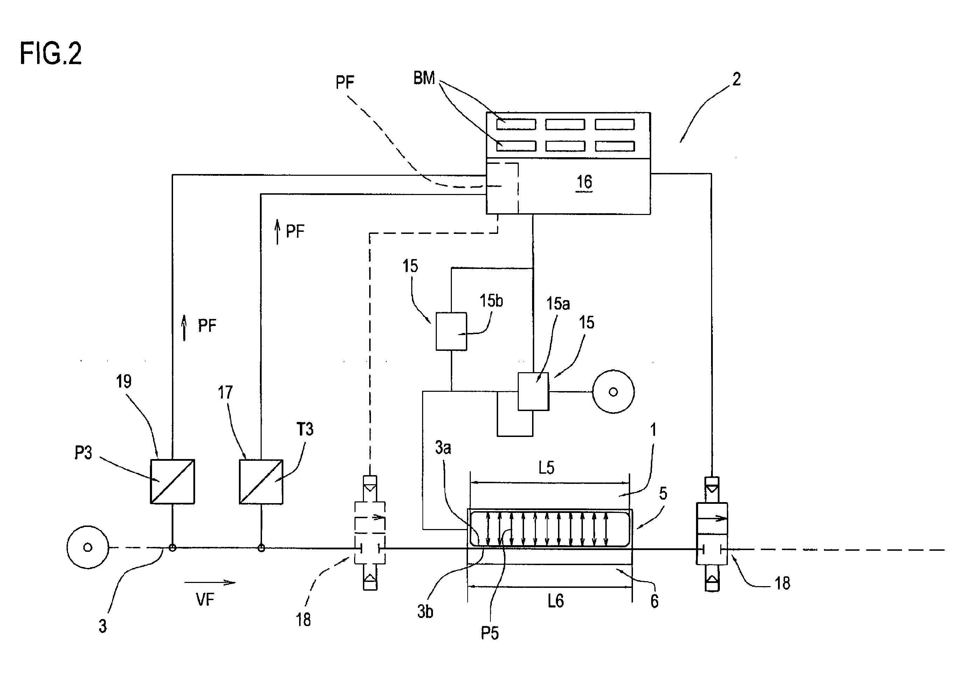

With reference to the accompanying drawings, and with particular reference to Figures 1 and 2, the device according to this invention, labeled 1 in its entirety, is used for regulating the flow of a liquid (known as "slip" with abrasive characteristics, but without restricting the scope of the invention) used for the manufacture of ceramic products.

In particular, this device 1 is applicable in plants 2 with at least one elastically deformable pipe 3, for supplying and/or draining the liquid to/from the mould, which is not illustrated here since it is prior art and does not strictly form part of this invention, for the formation of the ceramic product.

Obviously, a plant 2 of this type usually comprises a tank for storing the slip arriving from pipe 3 and which enables, using additional pipes, supply of the slip to the mould according to specific pressures determined by the casting cycle during formation of the solid.

It also comprises pipes which drain off the spent slip which is normally carried to a second storage tank.

These elements are not described and illustrated as they do not strictly form part of this invention.

It should be noted, however, that the device according to this invention may be applied to any elastically deformable pipe forming part of the plant, without limiting the inventive concept.

With reference to Figures 1 and 2, the pipe 3 is connected to the device 1 for regulating the flow in question, which comprises at least one actuator element 5 and fixed contrast elements 6.

More precisely, the actuator element 5 is placed in contact with an outer surface 3a of the pipe 3; this actuator 5 may generate a controlled pressure, indicated generically with arrows P5, unilaterally on the outer surface 3a of the portion of the pipe 3 with which it is in contact.

The fixed contrast elements 6 are fitted to and acting on at least the outer surface 3b of the pipe 3 opposite to the surface 3a in contact with the actuator 5 and for a length L6 comparable to the length L5 in contact with the actuator 5: in this way, when the actuator 5 is activated, the portion of the pipe 3 can be deformed in a controlled and uniform manner, thereby reducing the cross-section of the pipe 3.

Preferably, this contrast length L6 may be substantially equal to the length L5, without restricting the scope of the inventive concept, since small increases or decreases to the contrast surface may be permitted depending on the operational requirements.

In other words, the length L6 of the contrast elements 6 may be less than the length L5 of contact of the actuator 5.

On the other hand, the length L6 of the contrast elements 6 may be greater than the contact length L5 of the actuator 5.

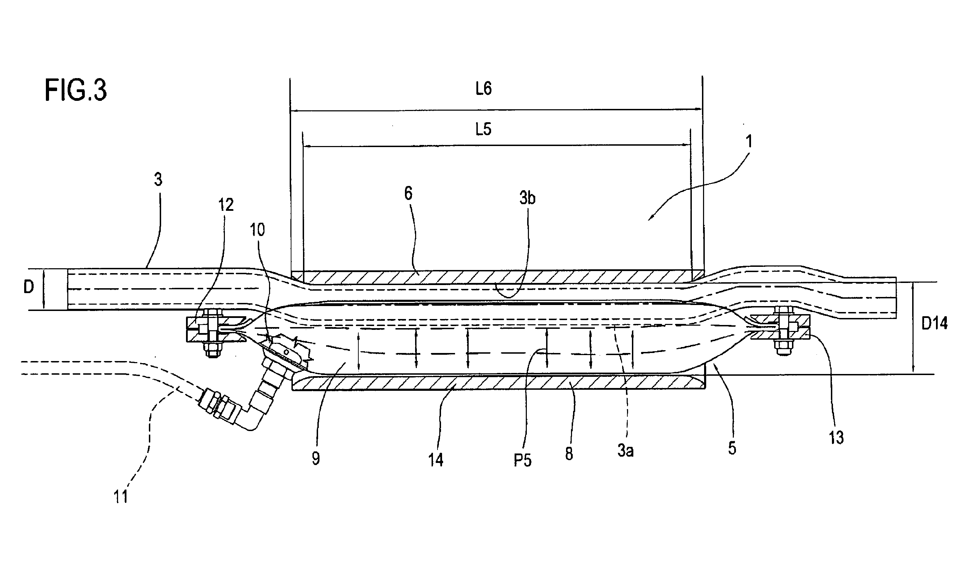

As may be clearly seen in Figure 3, the actuator 5 is placed in contact with the surface 3a of the pipe 3 for a length L5 at least greater than the characteristic dimension of the cross-section of the pipe 3 used.

In the case illustrated, the characteristic dimension is given by the diameter D of the pipe 3 used which has a circular shape, but the dimension D represents, more generically, a characteristic dimension of the cross-section of the pipe 3 used, if it is not circular in shape.

Preferably, in order to minimize the damage which may be caused by the wear on the pipe 3, this length L5 of contact may be between two and twenty-five times the diameter D of the pipe 3, even though these dimensions are not mandatory and may vary on the basis of various parameters, such as, the shapes and sizes of the pipes used and their construction material.

As may be seen in Figure 1, the actuator 5 may also be fitted with contrast elements 8 which are fixed and independent of the actuator 5 to keep the actuator 5 stable with respect to the pipe 3 to enable the unilateral, controlled and uniform deformation of the portion of the pipe 3.

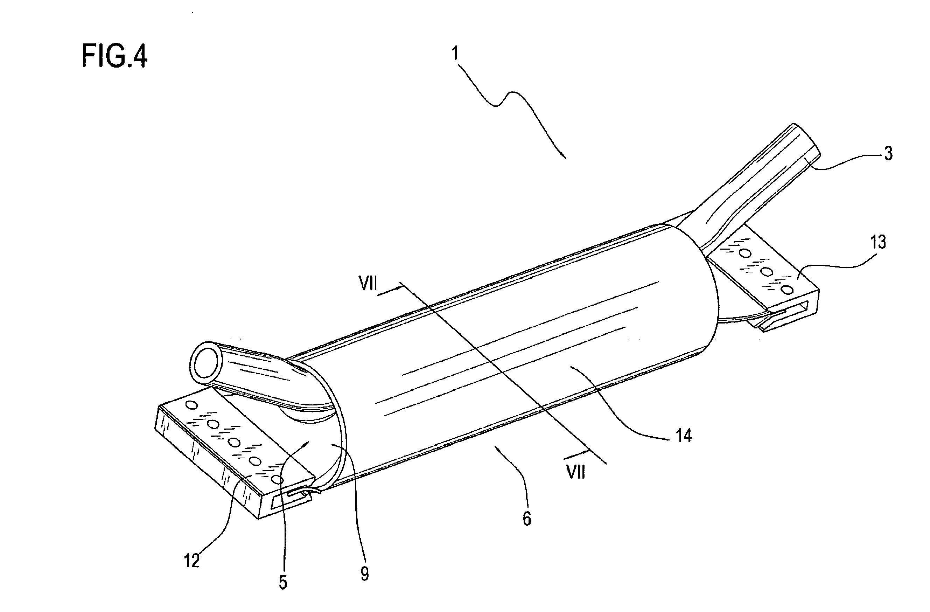

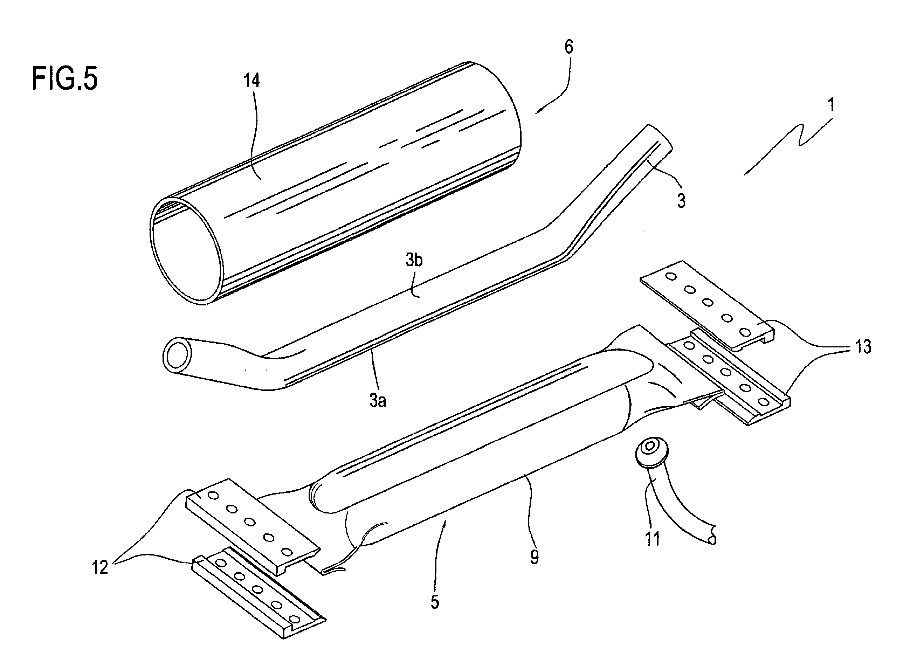

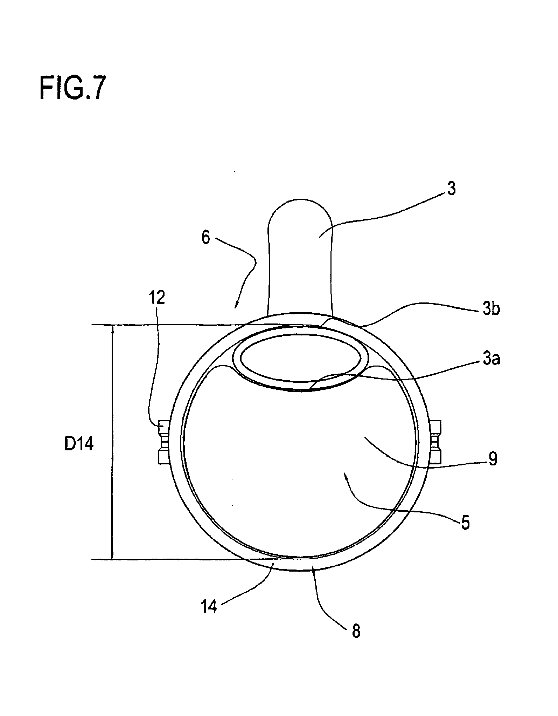

In a preferred embodiment illustrated in Figures 2 to 5 and 7, without restricting the scope of the inventive concept, the above-mentioned actuator 5 may comprise a closed chamber or sleeve 9 fitted with an opening 10 connected to a pipe 11 for supplying / draining a fluid to enable the controlled changing of the sleeve 9 from a least extended configuration to a fully extended configuration, and vice versa (see continuous and dashed lines, respectively, in Figure 3).

This sleeve 9 is opportunely closed at the respective ends by a pair of sealing clamps 12 and 13.

With regard to the above-mentioned contrast elements 6, these may comprise a cylindrical tubular element 14 through which the pipe 3 passes and which houses the sleeve 9: in this way, a contrast wall 6 is defined for the pipe 3 on its surface 3b and a striker wall 8 also for the sleeve 9 on its free surface.

Obviously this cylindrical tubular element 14 must have a very precise size in order to obtain the desired result, that is, it must have:
- a length L6 comparable to the length L5 of the surface 3a of the pipe 3 in contact with the sleeve 9, and
- a diameter D14 comparable to the dimension of the sleeve 9 in the above-mentioned fully extended configuration.

Basically, the diameter D14, indicated as the internal diameter for contact between the cylindrical element 14 and pipe 3 - sleeve 9 may be practically identical to the sleeve 9 in the fully extended configuration or slightly greater than the sleeve 9 in this configuration.

Looking more closely at the details, the sleeve 9 may be supplied, by the above-mentioned supply /drainage pipe 11, with a fluid which may be, for example, without restricting the scope of the inventive concept, air coming from a main supply.

This fluid supply / drainage pipe 11 may be fitted with operation and measurement elements 15 (for example, a proportional valve 15a and a transducer / pressure measurement device 15b) to enable the controlled supply and drainage of the fluid upon the command of a main control unit 16. In order to optimize the operation of this flow regulating device 1, the pipe 3 may be fitted with several units for observation and measurement of parameters useful for its operation.

As may be observed in Figures 1 and 2, the pipe 3 may be fitted with a unit 17 for measuring the temperature T3 (for example, a temperature transducer) of the liquid passing through the pipe 3 connected to the above-mentioned main control unit 16.

In the specific case of Figures 1 and 2, the unit 17 for measurement of the temperature T3 is fitted upstream of the device 1 relative to the direction VF of supply of the liquid to the mould.

In addition, the pipe 3 may be fitted with an additional unit 19 for measuring the pressure P3 (for example, a pressure transducer) present in the pipe 3 connected to the main control unit 16.

This unit 19 for measuring the pressure P3 may also be fitted upstream of the device 1 relative to the direction VF of supply of the liquid to the mould.

In addition to these elements, the pipe 3 may also be fitted with a liquid flow on-off valve 18, connected to the main control unit 16, to enable supply of the pipe 3 at a pressure P3 preferably constant (at least in the liquid inlet section) and, respectively, a complete closure of the pipe 3.

In Figure 1 this valve 18 is fitted upstream of the device 1 relative to the direction VF of supply of the flow of liquid to the mould (and downstream of the above-mentioned observation and measurement units), but the valve may be positioned downstream of the device 1 relative to the direction VF of supply of the liquid (see Figure 2) or also at both points of the pipe 3, that is, upstream and downstream of the device 1 (see dashed line in Figure 2).

The actuator 5 is also connected to the main control unit 16, which has memory banks BM for setting the controlled activation/deactivation of the actuator 5 on the basis of parameters PF for operation of the plant 2 which may be pre-set and/or stored, even in real time.

These parameters PF may comprise the relation between the pressure P9 present in the sleeve 9 and the flow PT of the fluid through the pipe 3 based on the temperature data T3 for the liquid, the size of the supply pipe 3, that is, the diameter D of the pipe 3, the inlet pressure P3 in the pipe 3, the direction VF of the liquid flow, based on the steps of the operational cycle of the plant 2.

With these parameters PF known and thanks to the overall control of the unit 16 it is possible to obtain the desired flow rate in the pipes in a precise, constant and fast manner thanks to a variation of the passage cross-section in the portion of pipe 3 in which the sleeve 9 acts.

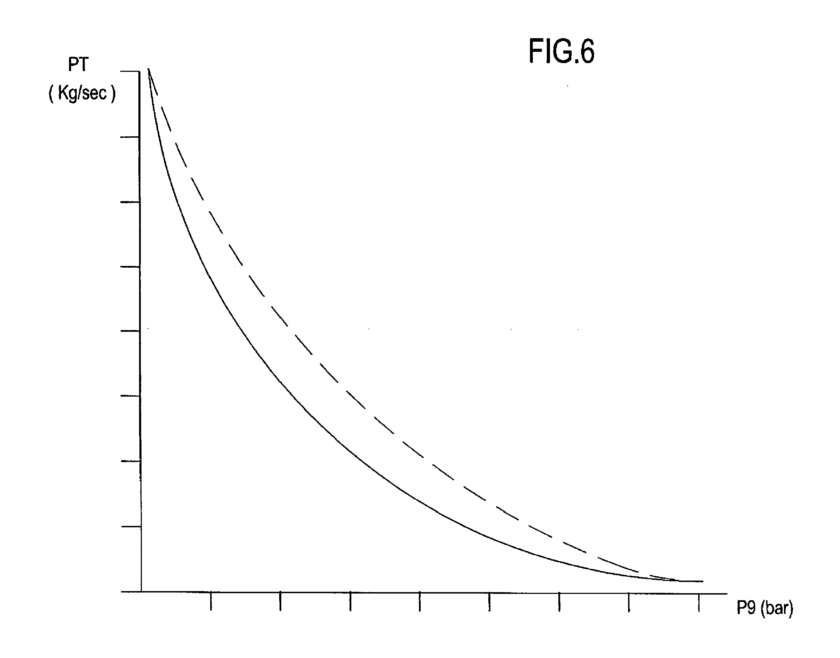

These considerations are confirmed by the graph shown in Figure 6 in which values of the pressure P9 present in the sleeve 9 are given on the X-axis in bars, whilst values of flow PT on the outlet section of the pipe 3 are given on the Y-axis in kg/sec.

The two curves generated (the dashed line is the curve for the flow obtained for increasing values of P9 and, therefore, of P5, too, and the continuous line is the curve for the flow obtained for decreasing values of P9 and, therefore, of P5, too, which may be different due to an erratic behavior of the chain of command of P5) confirm that, even though the reduction of the pipe cross-section is controlled by means of a compressible fluid, the correlation with the desired flows occurs with a high precision, and it is therefore possible to carry out a particularly sophisticated setting of the values of the system depending on the requirements of the plant and the cycle which must be carried out to process the ceramic product in an appropriate manner.

A device manufactured in this way therefore fully achieves the above mentioned aims thanks to a flow regulator having the following characteristics:
- inexpensive and simple to manufacture (reduced cost of its components and simple materials);
- may be fitted to any type of pipe in the plant, if it is elastically deformable, without diversifying its structure, that of the pipe and its precision and operational reliability;
- long operational life thanks to the possibility of varying the cross-section of the pipe from the outside of the pipe and over a large contact surface given by an adaptable surface, in order to reduce wear of both the pipe component and the actuator.

This device, therefore, enables a reduction of the cross-section of the pipe generating variable and controlled head losses, in a fast manner, enabling the mass quantity of the fluid to be controlled through a section of the pipe in the unit of time: this, as mentioned above, is very important in the processes for manufacturing ceramic products with slip in order to avoid alterations of the liquid during its supply to / drainage from the mould.

The invention described above is susceptible of industrial application and can be modified and adapted in several ways without thereby departing from the scope of the inventive concept. Moreover, all details of the invention may be substituted by technically equivalent elements.

## Claims

1. A device for regulating the flow of a liquid used for the manufacture of ceramic products; the device (1) being applicable in plants (2) with at least one elastically deformable pipe (3), for supplying and/or draining the liquid to/from a mould, for the formation of the ceramic product, comprising:
- an actuator element (5), placed in contact with the outer surface (3a) of the pipe (3), the actuator (5) being designed to generate a controlled pressure (P5), on the outer surface (3a) of the portion of the pipe (3) with which it is in contact;
- fixed contrast elements (6) fitted to and acting on at least the outer surface (3b) of the pipe (3) opposite to the surface (3a) in contact with the actuator (5) and for a length (L6) comparable with the length (L5) in contact with the actuator (5), the device being **characterized in that** the fixed contrast elements (6) enable the portion of the pipe (3), when the actuator (5) is activated, to be deformed in a controlled and uniform manner for generating variable and controlled head losses in the pipe and **in that** the actuator element (5) extends parallel to the elastically deformable pipe (3) and is placed in contact with the surface (3a) of the pipe (3) for a length (L5) at least greater than the characteristic dimension of the pipe (3).

2. The device according to claim 1, where the pipe (3) has a diameter (D), wherein the actuator (5) is placed in contact with the surface (3a) of the pipe (3) for a length (L5) at least greater than the diameter (D) of the pipe (3).

3. The device according to claim 1, wherein the actuator (5) has fixed contrast elements (8) to keep the actuator (5) stable with respect to the pipe (3) to enable the unilateral, controlled and uniform deformation of the portion of the pipe (3).

4. The device according to claim 1, wherein the actuator (5) comprises a closed chamber or sleeve (9) having an opening (10) connected to a pipe (11) for supplying / draining a fluid to enable the controlled changing of the sleeve (9) from a least extended configuration to a fully extended configuration, and vice versa.

5. The device according to claim 4, wherein the sleeve (9) is closed at the respective ends by a pair of sealing clamps (12, 13).

6. The device according to claim 1, wherein the contrast elements (6) comprise a cylindrical tubular element (14) through which the pipe (3) passes and which houses the actuator (5), in order to define a contrast wall for the pipe (3) and a striker wall for the actuator (5); the cylindrical tubular element (14) having a length (L6) comparable to the length (L5) of the contact surface (3a) of the pipe (3) with the actuator (5).

7. The device according to claim 1, comprising:
- a closed chamber or sleeve (9), defining the actuator (5), having an opening (10) connected to a pipe (11) for supplying / draining a fluid to enable the controlled changing of the sleeve from a least extended configuration to a fully extended configuration, and vice versa;
- a cylindrical tubular element (14), defining the contrast elements (6), through which the pipe (3) passes and which houses the sleeve (9), in order to define a contrast wall for the pipe (3) and a striker wall for the sleeve (9); the cylindrical tubular element (14) having a length (L6) comparable to the length (L5) of the contact surface of the pipe (3) with the sleeve (9).

8. The device according to claim 7, wherein the cylindrical tubular element (14) has a diameter (D14) comparable with the dimension of the sleeve (9) in the fully extended configuration.

9. The device according to claim 4 or 7, wherein the sleeve (9) may be supplied with a gaseous fluid.

10. The device according to claim 4 or 7, wherein the fluid supply / drainage pipe (11) is fitted with operational elements (15) to enable the controlled supply, and, respectively, drainage of the fluid upon the command of a main control unit (16).

11. The device according to claim 1, wherein the pipe (3) is fitted with a unit (17) for measuring the temperature (T3) of the liquid passing through the pipe (3) connected to a main control unit (16).

12. The device according to claim 11, wherein the unit (17) for measuring the temperature (T3) is fitted upstream of the device (1) relative to the direction (VF) of supply of the liquid.

13. The device according to claim 1, wherein the pipe (3) is fitted with a liquid flow on-off valve (18), connected to a main control unit (16), to enable supply of the pipe (3) at a constant pressure (P3) and, respectively, a complete closure of the pie(3).

14. The device according to claim 13, wherein the valve (18) is fitted upstream of the device (1) relative to the direction (VF) of supply of the liquid.

15. The device according to claim 13, wherein the valve (18) is fitted downstream of the device (1) relative to the direction (VF) of supply of the liquid.

16. The device according to claim 1, wherein the pipe (3) is fitted with a unit (19) for measuring the pressure (P3) present in the pipe (3) and connected to a main control unit (16).

17. The device according to claim 16, wherein the unit (19) for measuring the pressure (P3) is fitted upstream of the device (1) relative to the direction (VF) of supply of the liquid.

18. The device according to claim 1, wherein the actuator (5) is connected to a control unit (16) having memory banks (BM) for setting the controlled activation / deactivation of the actuator (5) on the basis of operational parameters (PF) for the plant (2) which may be pre-set and/or stored, even in real time.

19. The device according to claim 18, wherein the parameters (PF) comprise at least temperature data (T3) of a liquid and the direction (VF) of flow of the liquid based on the steps of the operational cycle of the plant (2).

20. The device according to claim 18, wherein the parameters (PF) also comprise the size of the supply pipe (3), that is, the diameter (D) of the pipe (3), and a pressure (P3) present in the pipe (3).

## Patentansprüche

1. Vorrichtung zur Regelung des Flusses einer Flüssigkeit, die für die Herstellung von Keramikprodukten verwendet wird, wobei die Vorrichtung (1) in Anlagen (2) mit mindestens einem elastisch verformbaren Schlauch (3) zum Zulauf und/oder Ablauf der Flüssigkeit zu/von einem Formwerkzeug verwendbar ist, um das Keramikprodukt auszuformen, umfassend:
- ein Aktorelement (5), das an der Außenfläche (3a) des Schlauches (3) anliegend platziert ist, wobei der Aktor (5) dazu konzipiert ist, einen kontrollierten Druck (P5) auf die Außenfläche (3a) des Abschnitts des Schlauches (3) zu erzeugen, an dem er anliegt;
- fixierte, kontrastierende Elemente (6), die mindestens an die Außenfläche (3b) des Schlauches (3) gegenüber der am Aktor (5) anliegenden Oberfläche (3a) über eine Länge (L6), die mit der am Aktor (5) anliegenden Länge (L5) vergleichbar ist, angepasst sind und darauf einwirken, wobei die Vorrichtung **dadurch gekennzeichnet ist, dass** die fixierten, kontrastierenden Elemente (6) gewährleisten, dass der Abschnitt des Schlauches (3) bei Aktivierung des Aktors (5) auf kontrollierte und gleichmäßige Art und Weise verformt wird, um variable und kontrollierte Druckverluste im Schlauch zu erzeugen, und dass sich das Aktorelement (5) parallel zum elastisch verformbaren Schlauch (3) erstreckt und an der Oberfläche (3a) des Schlauches (3) über eine Länge (L5) anliegend platziert ist, die mindestens größer als die charakteristische Größe des Schlauches (3) ist.

2. Vorrichtung nach Anspruch 1, wobei der Schlauch (3) einen Durchmesser (D) aufweist, wobei der Aktor (5) an der Oberfläche (3a) des Schlauches (3) über eine Länge (L5) anliegend platziert ist, die mindestens größer als der Durchmesser (D) des Schlauches (3) ist.

3. Vorrichtung nach Anspruch 1, wobei der Aktor (5) fixierte, kontrastierende Elemente (8) aufweist, um den Aktor (5) gegenüber dem Schlauch (3) stabil zu halten, um die unilaterale, kontrollierte und gleichmäßige Verformung des Abschnitts des Schlauches (3) zu gewährleisten.

4. Vorrichtung nach Anspruch 1, wobei der Aktor (5) eine geschlossene Kammer oder Hülse (9) umfasst, aufweisend eine Öffnung (10), die mit einem Schlauch (11) zum Zulauf/Ablauf eines Fluids verbunden ist, um das kontrollierte Ändern der Hülse (9) von einer am wenigsten erweiterten Konfiguration in eine voll erweiterte Konfiguration und umgekehrt zu gewährleisten.

5. Vorrichtung nach Anspruch 4, wobei die Hülse (9) an den entsprechenden Enden durch ein Paar abdichtender Klemmen (12, 13) verschlossen wird.

6. Vorrichtung nach Anspruch 1, wobei die kontrastierenden Elemente (6) ein zylindrisches, rohrförmiges Element (14) umfassen, durch welches der Schlauch (3) verläuft und das den Aktor (5) aufnimmt, um eine kontrastierende Wand für den Schlauch (3) und eine Wand zum Anschlag für den Aktor (5) zu bilden; wobei das zylindrische, rohrförmige Element (14) eine Länge (L6) aufweist, die mit der Länge (L5) der am Aktor (5) anliegenden Oberfläche (3a) des Schlauches (3) vergleichbar ist.

7. Vorrichtung nach Anspruch 1, umfassend:
- eine geschlossene Kammer oder Hülse (9), definierend den Aktor (5), aufweisend eine Öffnung (10), die mit einem Schlauch (11) zum Zulauf/Ablauf eines Fluids verbunden ist, um das kontrollierte Ändern der Hülse von einer am wenigsten erweiterten Konfiguration in eine voll erweiterte Konfiguration und umgekehrt zu gewährleisten;
- ein zylindrisches, rohrförmiges Element (14), definierend die kontrastierenden Elemente (6), durch das der Schlauch (3) verläuft und das die Hülse (9) aufnimmt, um eine kontrastierende Wand für den Schlauch (3) und eine Wand zum Anschlag für die Hülse (9) zu bilden; wobei das zylindrische, rohrförmige Element (14) eine Länge (L6) aufweist, die mit der Länge (L5) der an der Hülse (9) anliegenden Oberfläche des Schlauches (3) vergleichbar ist.

8. Vorrichtung nach Anspruch 7, wobei das zylindrische, rohrförmige Element (14) einen Durchmesser (D14) aufweist, der mit der Größe der Hülse (9) in der voll erweiterten Konfiguration vergleichbar ist.

9. Vorrichtung nach Anspruch 4 oder 7, wobei ein gasförmiges Fluid in die Hülse (9) zulaufen kann.

10. Vorrichtung nach Anspruch 4 oder 7, wobei der Schlauch (11) zum Fluidzulauf/-ablauf mit Betriebselementen (15) ausgestattet ist, um beim Steuern einer Hauptsteuereinheit (16) den kontrollierten Zulauf bzw. Ablauf des Fluids zu gewährleisten.

11. Vorrichtung nach Anspruch 1, wobei der Schlauch (3) mit einer Einheit (17) zur Messung der Temperatur (T3) der Flüssigkeit ausgestattet ist, die durch den mit der Hauptsteuereinheit (16) verbundenen Schlauch (3) hindurch läuft.

12. Vorrichtung nach Anspruch 11, wobei die Einheit (17) zur Messung der Temperatur (T3) relativ zur Richtung (VF) des Flüssigkeitszulaufs der Vorrichtung (1) vorgelagert angeordnet ist.

13. Vorrichtung nach Anspruch 1, wobei der Schlauch (3) mit einem Flüssigkeitsfluss-Schaltventil (18) ausgestattet ist, das mit einer Hauptsteuereinheit (16) verbunden ist, um den Zulauf zum Schlauch (3) bei einem konstanten Druck (P3) bzw. einen vollständigen Verschluss des Schlauches (3) zu gewährleisten.

14. Vorrichtung nach Anspruch 13, wobei das Ventil (18) relativ zur Richtung (VF) des Flüssigkeitszulaufs der Vorrichtung (1) vorgelagert angeordnet ist.

15. Vorrichtung nach Anspruch 13, wobei das Ventil (18) relativ zur Richtung (VF) des Flüssigkeitszulaufs der Vorrichtung (1) nachgelagert angeordnet ist.

16. Vorrichtung nach Anspruch 1, wobei der Schlauch (3) mit einer Einheit (19) zur Messung des im Schlauch (3) vorhandenen Drucks (P3) ausgestattet und mit einer Hauptsteuereinheit (16) verbunden ist.

17. Vorrichtung nach Anspruch 16, wobei die Einheit (19) zur Messung des Drucks (P3) relativ zur Richtung (VF) des Flüssigkeitszulaufs der Vorrichtung (1) vorgelagert angeordnet ist.

18. Vorrichtung nach Anspruch 1, wobei der Aktor (5) mit einer Steuereinheit (16) verbunden ist, aufweisend Speicherbänke (BM) zum Einstellen der kontrollierten Aktivierung/Deaktivierung des Aktors (5) auf der Grundlage von Betriebsparametern (PF) der Anlage (2), die, selbst in Echtzeit, voreingestellt und/oder gespeichert werden können.

19. Vorrichtung nach Anspruch 18, wobei die Parameter (PF) mindestens Temperaturdaten (T3) einer Flüssigkeit und die Richtung (VF) des Flüssigkeitsflusses umfassen, die auf den Schritten des Betriebszyklus der Anlage (2) basieren.

20. Vorrichtung nach Anspruch 18, wobei die Parameter (PF) ferner die Größe des Zulaufschlauches (3), d. h. den Durchmesser (D) des Schlauches (3), und einen im Schlauch (3) vorhandenen Druck (P3) umfassen.

## Revendications

1. Dispositif de régulation du flux de liquides utilisé pour la fabrication de produits céramiques ; le dispositif (1) étant applicable dans des installations (2) ayant au moins un conduit déformable élastiquement (3), en mesure d'alimenter et/ou de drainer le liquide d'un moule ou vers ledit moule, pour la formation du produit céramique, comprenant:
- un élément d'actionnement (5), placé en contact avec la surface externe (3a) du conduit (3), l'actionneur (5) étant conçu pour générer une pression contrôlée (P5) sur la surface externe (3a) de la partie du conduit (3) avec laquelle il se trouve en contact ;
- des éléments de contraste fixes (6) adaptés et agissant sur au moins la surface externe (3b) du conduit (3) situé à l'opposé de la surface (3a) en contact avec l'actionneur (5) et sur une longueur (L6) comparable à la longueur (L5) en contact avec l'actionneur (5), le dispositif étant **caractérisé en ce que** les éléments de contraste fixes (6) activent la partie du conduit (3) lorsque l'actionneur (5) est activé, pour être déformée d'une façon contrôlée et uniforme afin de générer des pertes de charge variables et contrôlées dans le conduit et **en ce que** l'élément actionneur (5) se développe parallèlement par rapport au conduit déformable élastiquement (3) et est placé en contact avec la surface (3a) du conduit (3) sur une longueur (L5) au moins supérieure à la dimension caractéristique du conduit (3).

2. Dispositif selon la revendication 1, où le conduit (3) possède un diamètre (D), dans lequel l'actionneur (5) est placé en contact avec la surface (3a) du conduit (3) sur une longueur (L5) au moins supérieure au diamètre (D) du conduit (3).

3. Dispositif selon la revendication 1, dans lequel l'actionneur (5) possède des éléments de contraste fixes (8) pour maintenir l'actionneur (5) stable par rapport au conduit (3) pour permettre la déformation unilatérale, contrôlée et uniforme de la partie du conduit (3).

4. Dispositif selon la revendication 1, dans lequel l'actionneur (5) comprend une cellule étanche ou manchon (9) disposant d'une ouverture (10) reliée à un conduit (11) pour alimenter / drainer un fluide pour activer la modification contrôlée du manchon (9) d'une configuration étendue minimale à une configuration étendue maximale, et vice-versa.

5. Dispositif selon la revendication 4, dans lequel le manchon (9) est fermé aux extrémités respectives par une paire de pinces de fixation (12, 13).

6. Dispositif selon la revendication 1, dans lequel les éléments de contraste (6) comprennent un élément tubulaire cylindrique (14) à travers lequel passe le conduit (3) et qui loge l'actionneur (5) afin de définir une paroi de contraste pour le conduit (3) et une paroi de butée pour l'actionneur (5); l'élément tubulaire cylindrique (14) ayant une longueur (L6) comparable à la longueur (L5) de la surface de contact (3a) du conduit (3) avec l'actionneur (5).

7. Dispositif selon la revendication 1, comprenant :
- une cellule étanche ou manchon (9), définissant l'actionneur (5), ayant une ouverture (10) reliée à un conduit (11) pour alimenter / drainer un fluide pour activer la modification contrôlée du manchon d'une configuration étendue minimale à une configuration étendue maximale et vice-versa;
- un élément tubulaire cylindrique (14), définissant les éléments de contraste (6) à travers lequel passe le conduit (3) et qui loge le manchon (9) afin de définir une paroi de contraste pour le conduit (3) et une paroi de butée pour le manchon (9); l'élément tubulaire cylindrique (14) ayant une longueur (L6) comparable à la longueur (L5) de la surface de contact du conduit (3) avec le manchon (9).

8. Dispositif selon la revendication 7, dans lequel l'élément tubulaire cylindrique (14) possède un diamètre (D14) comparable à la dimension du manchon (9) dans la configuration étendue maximale.

9. Dispositif selon les revendications 4 ou 7, dans lequel le manchon (9) peut recevoir un fluide gazeux.

10. Dispositif selon les revendications 4 ou 7, dans lequel le conduit d'alimentation / de drainage de fluide (11) est monté avec des éléments fonctionnels (15) pour activer l'alimentation contrôlée, et, respectivement, le drainage du fluide sur commande d'une unité de commande principale (16).

11. Dispositif selon la revendication 1, dans lequel le conduit (3) est monté à une unité (17) afin de mesurer la température (T3) du liquide passant à travers le conduit (3) relié à l'unité de commande principale (16).

12. Dispositif selon la revendication 11, dans lequel l'unité (17) servant à mesurer la température (T3) est montée en amont du dispositif (1) par rapport à la direction (VF) d'alimentation du liquide.

13. Dispositif selon la revendication 1, dans lequel le conduit (3) est monté avec une vanne marche/arrêt à circulation de liquide (18), reliée à une unité de commande principale (16) pour activer l'alimentation du conduit (3) à une pression constante (P3) et, respectivement, une fermeture complète du conduit (3).

14. Dispositif selon la revendication 13, dans lequel la vanne (18) est montée en amont du dispositif (1) par rapport à la direction (VF) d'alimentation du liquide.

15. Dispositif selon la revendication 13, dans lequel la vanne (18) est montée en aval du dispositif (1) par rapport à la direction (VF) d'alimentation du liquide.

16. Dispositif selon la revendication 1, dans lequel le conduit (3) est monté à une unité (19) afin de mesurer la pression (P3) présente dans le conduit (3) et relié à une unité de commande principale (16).

17. Dispositif selon la revendication 16, dans lequel l'unité (19) servant à mesurer la pression (P3) est montée en amont du dispositif (1) par rapport à la direction (VF) d'alimentation du liquide.

18. Dispositif selon la revendication 1, dans lequel l'actionneur (5) est relié à une unité de commande (16) disposant de banques de mémoire (BM) pour définir l'activation / la désactivation contrôlée de l'actionneur (5) sur la base de paramètres opérationnels (PF) pour l'installation (2) pouvant être prédéfinis et/ou stockés, même en temps réel.

19. Dispositif selon la revendication 18, dans lequel les paramètres (PF) comprennent au moins des données de température (T3) d'un liquide et de la direction (VF) du débit du liquide basées sur les étapes du cycle opérationnel de l'installation (2).

20. Dispositif selon la revendication 18, dans lequel les paramètres (PF) comprennent de plus la dimension du conduit d'alimentation (3), c'est-à-dire, le diamètre (D) du conduit (3) et une pression (P3) présente dans le conduit (3).
